# EUROPÄISCHE PATENTSCHRIFT

(11) **EP 0 678 957 B1**
(45) Veröffentlichungstag und Bekanntmachung des Hinweises auf die Patenterteilung: **12.08.1998**
(21) Anmeldenummer: 94105946.1
(22) Anmeldetag: 18.04.1994
(51) Int. Cl.: H02G 3/04

(54) **Kabelträger für Installationen in Gebäuden**
Cable holder for building installations
Support de cables pour installations dans les bâtiments

(43) Veröffentlichungstag der Anmeldung: 25.10.1995
(73) Patentinhaber: LANZ OENSINGEN AG, 4702 Oensingen (CH)
(72) Erfinder: Mühlethaler, Erhard, CH-3314 Schalunen (CH)
(74) Vertreter: OK pat AG

(56) Entgegenhaltungen:
- CH-A- 634 178
- NL-A- 8 500 184
- US-A- 2 917 259

## Beschreibung

Die Erfindung betrifft einen Kabelträger für Installationen nach dem Oberbegriff des Anspruchs 1.

Derartige Kabelträger werden insbesondere für die Verlegung von elektrischen Kabeln aller Art in Verwaltungs-, Gewerbe- und Industriebauten verwendet. Bekannt sind einerseits sogenannte Gitterbahnen, die aus abgewinkelten, geschweissten Drahtgittern hergestellt sind, und anderseites Kabelbahnen aus gelochtem und abgekantetem Blech. Beide sind nur für Kabel von relativ geringem Gewicht geeignet, wobei Gitterbahnen gegenüber den Kabelbahnen besser durchlüftet und installationsfreundlicher sind, da Kabel an beliebigen Stellen des Bodens oder der Seitenwände durch die Gitteröffnungen geführt werden können. Gitterbahnen (aus miteinander verschweissten Drähten von z.B. 4 mm Durchmesser) sind allerdings in Längs- und Querrichtung wenig belastbar und im allgemeinen nicht verwindungssteif. Bei lochgestanzten Kabelbahnen aus verzinktem Stahlblech lassen sich, wenn überhaupt, höchstens dünne Kabel durch die schmalen Löcher im Boden durchziehen. Die Lochränder sind scharfkantig und müssen beim Durchführen von Kabeln zur Vermeidung von Kabelverletzungen mit Tüllen versehen oder sonstwie "gepolstert" werden. Auch diese Kabelbahnen sind in Querrichtung nicht hoch belastbar. Um Durchbiegungen der Böden zu vermeiden, ist auch versucht worden, Prägungen von geringer Höhe anzubringen, die jedoch die Steifigkeit nicht wesentlich erhöhen.

Für grosse und schwere Kabel werden sogenannte Kabelpritschen verwendet, deren Boden aus in regelmässigen Abständen angeordneten Querstäben in Form von C-Profilen aus z.B. verzinktem Stahl besteht; die Querstäbe sind mit den durchgehenden Seitenwänden durch Punkt- oder Nahtschweissung oder durch Nieten verbunden. Kabelpritschen bieten so eine gute Kühlung der Kabel, wie sie bei Kabelbahnen selbst mit grossen Ausstanzungen nicht erreicht würde. Ausserdem sind Kabelpritschen insbesondere in Querrichtung weit höher belastbar als Gitterbahnen und Kabelbahnen, so dass sie auch grosse, schwere Kabel aufzunehmen vermögen. Da aber bei den im Handel erhältlichen Kabelpritschen die Querstäbe normalerweise Abstände von 150 oder 300 mm aufweisen, sind sie nicht für dünnere, flexible Kabel geeignet, da solche Kabel infolge der grossen Zwischenräume im Kabelpritschenboden durchhängen würden.

Aus der **US-A-2,917,259** ist ein Kabelträger bekannt, der aus einer verformten Blechbahn hergestellt ist und einen kanalartigen, einen Boden und zwei Seitenwände aufweisenden Querschnitt besitzt. Der Boden weist eine durchbrochene Struktur auf, mit Querstegen, die Durchbrechungen trennen und die zwecks Erhöhung der Steifigkeit aus der Ebene des Bodens heraus zu Profilen verformt sind. Die Durchbrechungen des Bodens erstrecken sich über die gesamte Breite des Bodens und sind in Längsrichtung des Kabelträgers gesehen kurz, so dass sie als schlitzartige Durchbrechungen bezeichnet werden können. In Längsrichtung gesehen wechseln sich Durchbrechungen und Querstege von etwa gleichen Abmessungen ab. Dies bedeutet, dass je etwa die Hälfte des Bodens aus Material und die aus Durchbrechungen besteht. Dieser Kabelträger eignet sich daher nicht für die Führung von schweren Kabeln mit grossen Querschnitten, da eine Herausführung solcher Kabel durch die Durchbrechungen nicht möglich ist. Ausserdem ist eine Abfuhr von Wärme durch die nur etwa 50% der Bodenfläche ausmachenden Durchbrechungen in vielen Fällen nicht in genügendem Masse möglich.

Die **NL-A-8 500 184** beschreibt einen Kabelträger, der aus einer verformten Blechbahn hergestellt ist und einen kanalartigen, einen Boden und zwei Seitenwände aufweisenden Querschnitt besitzt. Der Boden weist eine durchbrochene Struktur auf, mit Querstegen, die Durchbrechungen trennen und die zwecks Erhöhung der Steifigkeit aus der Ebene des Bodens heraus zu Profilen verformt sind. Die Abmessungen der Durchbrechungen sind in Längsrichtung des Kabelträgers bedeutend grösser als in Querrichtung, so dass sich verhältnismässig dünne Querstege mit grossen, fensterartigen Durchbrechungen abwechseln. Diese Kabelträger eignen sich wohl sehr gut zur Führung von schweren Kabeln mit grossen Durchmessern, denn infolge der grossen, fensterartigen Durchbrechungen ermögliche sie sowohl das Abzweigen von Kabeln wie auch die Abfuhr von Wärme durch diese Durchbrechungen hindurch. Der Nachteil dieser Kabelträger besteht darin, dass sie sich nicht zur Führung extrem feiner, sehr stark durchhängnder Kabel eignen, da sich die fensterartigen Durchbrüche über die gesamte Breite des Bodens erstrecken.

Insgesamt müssen bisher also in einem Bauwerk oft drei Arten von Kabelträgern nebeneinander verwendet werden (Stand der Technik gemäss Katalog "Kabelträgersysteme" der Lanz Oensingen AG, CH-4702 Oensingen, März 1993). Dies führt bereits bei der Planung von Kabeltrassen zu bedeutendem Aufwand, der sich bei der Herstellung, dem Transport, der Lagerung und der Montage weiter fortsetzt.

Der Erfindung liegt die Aufgabe zugrunde, einen preisgünstigen Kabelträger der eingangs genannten Art vorzuschlagen, der vorstehend erwähnte Nachteile nicht aufweist und insbesondere für dünne, leichtere wie auch dicke, schwere Kabel gleichermassen geeignet ist.

Diese Aufgabe wird durch die im Patentanspruch 1 gekennzeichnete Erfindung gelöst. Demnach weist der Boden des Kabelträgers fensterartige Durchbrechungen auf, welche durch Querstege voneinander getrennt sind. Diese und Durchbrechungen Querstege erstrecken sich zwischen Seitenbereichen des Bodens, die entlang den Seitenwänden verlaufen und mit langslöchern zur Befestigung des Kabelträgers und mit Verstärkungen versehen sind. Zwecks Erhöhung der Steifigkeit sind die Querstege aus der Ebene des Bodens heraus zu Profilen verformt.

Die mit der Erfindung erzielten Vorteile sind darin zu sehen, dass der Kabelträger durch Stanzen und Verformen einstückig gefertigt ist, wobei durch die besondere Formgebung der Querstege eine Stabilität erzielt wird, die eine universelle Verwendung des Kabelträgers ermöglicht. Da keine Niet-, Schweiss- oder andere Fügestellen vorhanden sind, ist die Fabrikation relativ einfach und die Herstellungskosten sind entsprechend niedrig. Ausserdem ist wegen der fehlenden Fügestellen die Korrosionsanfälligkeit stark vermindert. Eine leicht V-förmige Ausgestaltung des Kabelträgerquerschnittes ermöglicht das Stapeln von Kabelträgern gleicher Breite, was sich bei Fertigung, Lagerung und Transport günstig auswirkt. Durch die vorgeschlagene, kabelschonende Formgebung der Querstege können Beschädigungen des Kabelmantels bei Durchführung durch die Durchbrechungen des Bodens weitgehend vermieden werden.

Im folgenden wird die Erfindung anhand mehrerer Ausführungsbeispiele in Verbindung mit der Zeichnung näher erläutert. Es zeigen:
- Fig. 1: eine perspektivische Darstellung eines Teiles des erfindungsgemässen Kabelträgers in einer ersten Ausführungsform,
- Fig. 2: eine perspektivische Darstellung eines Teiles des Kabelträgers in einer zweiten Ausführungsform,
- Fig. 3: eine Abwicklung des Kabelträgers in verschiedenen Stadien der Fertigung,
- Fig. 4a: einen hälftigen Querschnitt des Kabelträgers mit nach oben verformten Querstegen, und
- Fig. 4b: einen hälftigen Querschnitt des Kabelträgers mit nach unten verformten Querstegen.

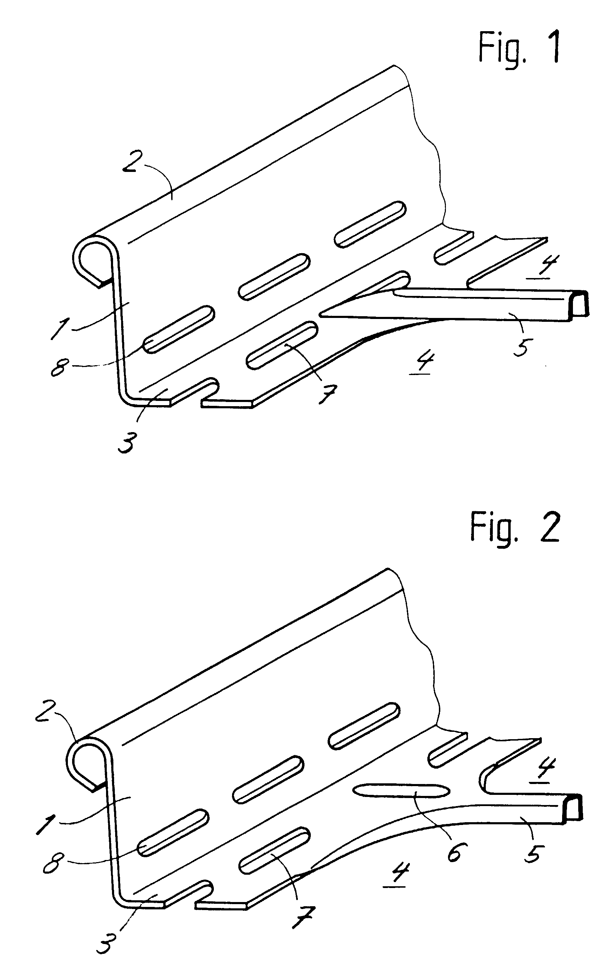

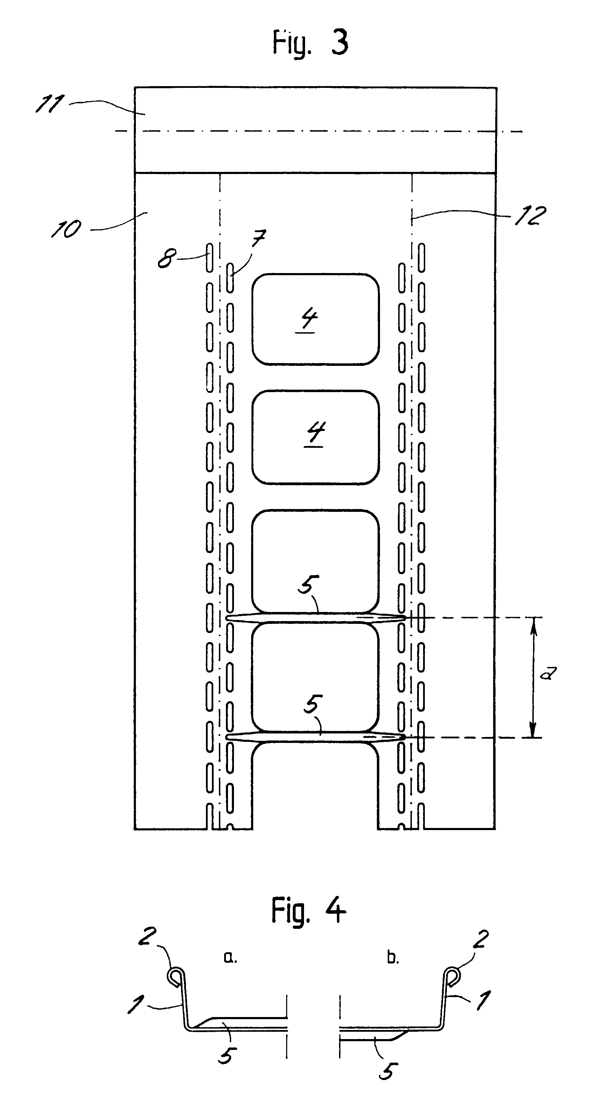

In den Fig. 1 und 2 ist mit 1 die eine Seitenwand des kanalartigen Profils bezeichnet, die an ihrem oberen Ende eingerollt ist, wodurch ein Versteifungswulst 2 gebildet wird. Die Seitenwand 1 schliesst mit einem horizontalen, entlang der Seitenwand verlaufenden Seitenbereich 3 des Kanalbodens einen leicht stumpfen Winkel ein, wodurch ein V-förmiger Querschnitt des Kabelträgers entsteht, der das Stapeln von Kabelträgern gleicher Breite ermöglicht. Der Boden weist zwischen den Seitenbereichen 3 fensterartige Durchbrechungen 4 auf, welche durch Querstege 5 voneinander getrennt sind (siehe auch Fig. 3). Die Querstege 5 sind zwecks Erhöhung der Steifigkeit in bezug auf die Ebene des Kanalbodens derart verformt, dass Profile mit beispielsweise U-, V- oder auch O-förmigem Querschnitt gebildet werden.

Gemäss Fig. 1 sind die Querstege 5 vom Boden aus nach oben tiefgezogen, wobei die Verformung sich bis in die Seitenbereiche 3 hinein fortsetzt. Nach Fig. 2 dagegen ist die Verformung (hier vom Boden nach unten gezogen) auf die Querstege 5 beschränkt, jedoch sind zwecks zusätzlicher Versteifung in den Seitenbereichen 3, fluchtend mit den Querstegen 5, Verstärkungsrippen 6 angebracht, die beispielsweise durch Prägung hergestellt sind. Ausserdem ist die Verformung entlang den Rändern der Durchbrechungen 4 an den Seitenbereichen 3 fortgesetzt.

Der Abstand a zwischen den Querstegen 5 (Fig. 3) wird so gewählt, dass die flexibelsten zu verlegenden Kabel praktisch nicht durchhängen. In der Praxis hat sich hierbei ein Abstand a von etwa 50 mm bewährt.

In den Seitenbereichen 3 des Bodens sind Langlöcher 7 vorgesehen, die der Montage des Kabelträgers auf Wandauslegern oder anderen Abstützungen dienen. In den Seitenwänden 1 sind weitere Langlöcher 8 angeordnet, die beispielsweise für die Verbindung von in Längsrichtung aneinanderstossenden Kabelträgern benutzt werden können.

Wie aus Fig. 3 ersichtlich, wird bei der Herstellung der Kabelträger in einer Fertigungsstrasse eine Blechbahn 10 der erforderlichen Breite von einer Rolle 11 ("Coil") abgewickelt. Sodann werden die Durchbrüche 4 und die Langlöcher 7 und 8 ausgestanzt, sowie die Querstege 5 durch Ziehen des Blechmaterials zu Profilen verformt; ein beispielsweise U-förmig tiefgezogener Stegquerschnitt kann auch mittels Gesenk etwa O-förmig weiter verformt werden. Danach wird die Blechbahn 10 auf die erforderliche Länge abgeschnitten und der Versteifungswulst 2 durch Einrollen der Seitenränder hergestellt. Anschliessend werden durch Abkanten entlang den Linien 12 die Seitenwände 1 gebildet. Die Reihenfolge der vorgenannten Arbeitsgänge kann je nach Zweckmässigkeit auch eine andere sein.

In der Fig. 4 ist in der linken Hälfte a) der Querschnitt des Beispiels nach Fig. 1 dargestellt, wo die Verformung der Querstege 5 an der Oberseite des Bodens liegt. Die rechte Seite, Fig. 4b zeigt dagegen den hälftigen Querschnitt im Falle des Beispiels nach Fig. 2, d.h. bei Verformung der Querstege 5 vom Kanalboden nach unten.

## Patentansprüche

1. Kabelträger für Installationen, insbesondere in Gebäuden, bestehend aus einer verformten Blechbahn (**10**) mit kanalartigem, einen Boden und und zwei Seitenwände (**1**) aufweisenden Querschnitt, wobei der Boden eine durchbrochene Struktur mit fensterartigen Durchbrechungen (**4**) aufweist, die durch Querstege (**5**) voneinander getrennt sind und in Längsrichtung eine mehrfach grössere Abmessung aufweisen als die zwecks Erhöhung der Steifigkeit aus der Ebene des Bodens heraus zu Profilen verformten Querstege (**5**),
**dadurch gekennzeichnet**,
dass sich die fensterartigen Durchbrechungen (**4**) und die Querstege (**5**) zwischen entlang der Seitenwände (**1**) verlaufenden Seitenbereichen (**3**) des Bodens erstrecken, die mit den Querstegen (**5**) fluchtende aus der Ebene der Seitenbereiche (**3**) herausragende Verstärkungen (**5, 6**) und zur Befestigung des Kabelträgers vorgesehene, in Längsrichtung der Seitenbereiche (**3**) verlaufende Langlöcher (**7**) aufweisen.

2. Kabelträger nach Patentanspruch 1, dadurch gekennzeichnet, dass die Querstege (5) zu U- oder O-Profilen verformt sind.

3. Kabelträger nach Patentanspruch 1, dadurch gekennzeichnet, dass die Querstege (5) zu V-Profilen verformt sind.

4. Kabelträger nach Patentanspruch 1, dadurch gekennzeichnet, dass die Querstege (5) von der Bodenebene nach oben verformt sind.

5. Kabelträger nach Patentanspruch 1, dadurch gekennzeichnet, dass die Querstege (5) von der Bodenebene nach unten verformt sind.

6. Kabelträger nach Patentanspruch 1, dadurch gekennzeichnet, dass die Verformung der Querstege (5) in die Seitenbereiche (3) des Bodens hinein fortgesetzt ist.

7. Kabelträger nach Patentanspruch 1, dadurch gekennzeichnet, dass die Verformung der Querstege (5) an den Seitenbereichen (3) des Bodens entlang den Rändern der fensterartigen Durchbrechungen (4) fortgesetzt ist.

8. Kabelträger nach Patentanspruch 1, dadurch gekennzeichnet, dass die Verstärkungen geprägte Verstärkungsrippen (6) sind.

9. Kabelträger nach Patentanspruch 1, dadurch gekennzeichnet, dass die Seitenwände (1) entlang ihrem oberen Rand einen Versteifungswulst (2) aufweisen.

10. Kabelträger nach Patentanspruch 1, dadurch gekennzeichnet, dass die Seitenwände (1) mit dem Boden einen leicht stumpfen Winkel einschliessen.

## Claims

1. Cable holder for wiring systems, more particularly in buildings, consisting of a shaped sheet-metal web (10) with a raceway-like cross-section featuring a floor and two side walls (1), the floor having an open structure with window-like cutouts (4) which are separated from one another by cross-pieces (5) and whose longitudinal dimensions are a multiple of those of the cross-pieces (5) shaped out of the plane of the floor to produce profiles in order to provide increased rigidity,
**characterised in that**
the window-like cutouts (4) and the cross-pieces (5) extend between lateral regions (3) of the floor which run along the side walls (1) and which feature reinforcements (5, 6) in alignment with the cross-pieces (5) and protruding from the plane of the lateral regions (3), and slots (7) running in the longitudinal direction of the lateral regions (3) and provided for fixing the cable holder.

2. Cable holder according to claim 1, characterised in that the cross-pieces (5) are shaped into U or O profiles.

3. Cable holder according to claim 1, characterised in that the cross-pieces (5) are shaped into V profiles.

4. Cable holder according to claim 1, characterised in that the cross-pieces (5) are shaped upwards from the floor plane.

5. Cable holder according to claim 1, characterised in that the cross-pieces (5) are shaped downwards from the floor plane.

6. Cable holder according to claim 1, characterised in that the shaping of the cross-pieces (5) is continued into the lateral regions (3) of the floor.

7. Cable holder according to claim 1, characterised in that the shaping of the cross-pieces (5) is continued on the lateral regions (3) of the floor, along the edges of the window-like cutouts (4).

8. Cable holder according to claim 1, characterised in that the reinforcements are embossed strengthening ribs (6).

9. Cable holder according to claim 1, characterised in that along their top edge the side walls (1) feature a stiffening curl (2).

10. Cable holder according to claim 1, characterised in that the side walls (1) enclose a slightly obtuse angle with the floor.

## Revendications

1. Support de câbles pour des installations, notamment dans des bâtiments, comprenant une bande (10) en tôle déformée comportant une section transversale en forme de canal, présentant un fond et deux parois latérales (1), le fond présentant une structure ajourée avec des ajours (4) de type fenêtre qui sont séparés les uns des autres par des barrettes (5) transversales et présentent en direction longitudinale des dimensions plusieurs fois plus grandes que les barrettes transversales (5) déformées en faisant saillie du plan du fond en forme de profilés pour augmenter la rigidité, caractérisé en ce que les ajours (4) de type fenêtre et les barrettes transversales (5) s'étendent entre des zones latérales (3) du fond s'étendant le long des parois latérales (1), ces zones latérales présentant des renforcements (5, 6) alignés avec les barrettes transversales (5) et faisant saillie du plan des zones latérales (3), et des trous oblongs (7) s'étendant en direction longitudinale des zones latérales (3) et prévus pour la fixation du support de câbles.

2. Support de câbles selon la revendication 1, caractérisé en ce que les barrettes transversales (5) sont déformées en des profilés en U ou en O.

3. Support de câbles selon la revendication 1, caractérisé en ce que les barrettes transversales (5) sont déformées en des profilés en V.

4. Support de câbles selon la revendication 1, caractérisé en ce que les barrettes transversales (5) sont déformées depuis le plan du fond vers le haut.

5. Support de câbles selon la revendication 1, caractérisé en ce que les barrettes transversales (5) sont déformées depuis le plan du fond vers le bas.

6. Support de câbles selon la revendication 1, caractérisé en ce que la déformation des barrettes transversales (5) se prolonge jusque dans les zones latérales (3) du fond.

7. Support de câbles selon la revendication 1, caractérisé en ce que la déformation des barrettes transversales (5) au niveau des zones latérales (3) du fond se prolonge le long des bords des ajours (4) du type fenêtre.

8. Support de câbles selon la revendication 1, caractérisé en ce que les renforcements sont des nervures de renforcement (6) gaufrées.

9. Support de câbles selon la revendication 1, caractérisé en ce que les parois latérales (1) présentent le long de leurs bords supérieurs un bourrelet (2) de rigidification.

10. Support de câble selon la revendication 1, caractérisé en ce que les parois latérales (1) font avec le fond un angle légèrement obtus.
